# EUROPÄISCHE PATENTANMELDUNG

(11) **EP 4 303 101 A1**
(43) Veröffentlichungstag der Anmeldung: **10.01.2024**
(21) Anmeldenummer: 23181334.6
(22) Anmeldetag: 26.06.2023
(51) Int. Cl.: B62D 25/20, B62D 33/04

(54) **BODENSTRUKTUR EINES FAHRZEUGAUFBAUS, FAHRZEUGAUFBAU, VERFAHREN ZUR HERSTELLUNG EINER BODENSTRUKTUR UND VERWENDUNG**

(30) Priorität: 05.07.2022 DE 102022116705
(71) Anmelder: Kögel Trailer GmbH, 89349 Burtenbach (DE)
(72) Erfinder: SCHMUTZ-EGGERT, Gerhard, 89278 Nersingen (DE); BIRLE, Günter, 86877 Walkertshofen (DE); PRÖBSTLE, Roman, 89359 Kötz (DE); BAUR, Wolfgang, 89344 Aislingen (DE)
(74) Vertreter: Meissner Bolte Partnerschaft mbB

(57) **Zusammenfassung**

Die Erfindung betrifft eine Bodenstruktur (10) eines Fahrzeugaufbaus, insbesondere eines Kühlfahrzeugs, mit mehreren Querträgern (11) und mehreren Längsträgern (12), wobei sich die Querträger (11) zwischen den Längsträgern (12) erstrecken, und wenigstens einer oberen Deckschicht (13) und einer unteren Deckschicht (14), die mit den Querträgern (11) und/oder Längsträgern (12) fest verbunden sind, wobei zumindest die Querträger (11) in einem Zwischenraum (15) zwischen den beiden Deckschichten (13, 14) angeordnet sind, wobei wenigstens einer der Querträger (11) und wenigstens einer der Längsträger (12) aus einem Kunststoffmaterial mit eingebetteten Verstärkungsfasern gebildet sind.

## Beschreibung

Die Erfindung betrifft eine Bodenstruktur eines Fahrzeugaufbaus, einen Fahrzeugaufbau, insbesondere eines Kühlfahrzeugs, ein Verfahren zur Herstellung einer Bodenstruktur und die Verwendung einer Bodenstruktur. Eine Bodenstruktur nach dem Oberbegriff des Patentanspruchs 1 ist beispielsweise aus der EP 2 123 543 A1 bekannt.

Aus dem Stand der Technik sind Fahrzeugaufbauten bekannt, die eine Bodenstruktur mit Längsträger und sich zwischen diesen erstreckenden Querträgern aufweisen. Die Querträger sind zwischen einer unteren Deckschicht und einer oberen Deckschicht angeordnet. Es ist bekannt, dass die Querträger häufig aus Holz bestehen. Dies hat den Nachteil, dass die Bodenstruktur ein hohes Gewicht aufweist. Des Weiteren ist nachteilig, dass Querträger aus Holz feuchteempfindlich sind und bei Auftreten von Feuchte ihre mechanischen Eigenschaften geschwächt werden. Dadurch wird die Stabilität der Bodenstruktur erheblich verringert.

Eine solche Bodenstruktur ist beispielsweise aus der eingangs genannten EP 2 123 543 A1 bekannt, in der die Querträger aus einem Holzwerkstoff bestehen. Alternativ können die Querträger aus einem faserverstärktem Kunststoff bestehen, um Wärmebrücken zu verhindern. Dies ist insbesondere bei der Verwendung der Bodenstruktur in einem Kühlfahrzeugaufbau relevant. Bei der EP 2 123 543 A1 werden die Querträger mit Längsträgern eines Fahrzeugchassis verschraubt. Im Ergebnis soll das Gewicht der Bodenstruktur gegenüber dem allgemeinen Stand der Technik zwar verbessert sein. Dennoch ist in der EP 2 123 543 A1 das Gewicht der Bodenstruktur noch nicht zufriedenstellend optimiert.

Der Erfindung liegt daher die Aufgabe zu Grunde, eine Bodenstruktur für einen Fahrzeugaufbau anzugeben, der einfach und kostengünstig herstellbar ist und die ein geringes Gewicht bei hoher Stabilität aufweist. Ferner liegt der Erfindung die Aufgabe zu Grunde, einen Fahrzeugaufbau mit einer solchen Bodenstruktur, dessen Verwendung sowie ein Verfahren zur Herstellung einer Bodenstruktur anzugeben.

Erfindungsgemäß wird diese Aufgabe im Hinblick auf die Bodenstruktur durch den Gegenstand des Anspruchs 1 gelöst. Hinsichtlich des Fahrzeugaufbaus, des Herstellungsverfahrens und der Verwendung wird die vorstehend genannte Aufgabe jeweils durch den Gegenstand des Anspruchs 11 (Fahrzeugaufbau), des Anspruchs 12 (Herstellungsverfahren) und des Anspruchs 16 (Verwendung) gelöst.

Konkret wird die Aufgabe durch eine Bodenstruktur eines Fahrzeugaufbaus, insbesondere eines Kühlfahrzeugs, mit mehreren Querträgern und mehreren, insbesondere wenigstens zwei, Längsträgern gelöst. Die Querträger erstrecken sich zwischen den Längsträgern. Die Bodenstruktur weist des Weiteren wenigstens eine obere Deckschicht und eine untere Deckschicht auf, die mit den Querträgern und/oder Längsträgern fest verbunden sind. Zumindest die Querträger sind in einem Zwischenraum zwischen den beiden Deckschichten angeordnet. Wenigstens einer der Querträger und wenigstens einer der Längsträger sind aus einem Kunststoffmaterial mit eingebetteten Verstärkungsfasern gebildet. Mit anderen Worten sind der wenigstens eine Querträger und der wenigstens eine Längsträger aus einem faserverstärkten Kunststoffmaterial gebildet.

Die Erfindung hat verschiedene Vorteile. Durch die Ausbildung des wenigstens einen Querträgers und des wenigstens einen Längsträgers aus einem faserverstärkten Kunststoff weist die Bodenstruktur einerseits eine erhöhte Stabilität und andererseits ein besonders geringes Gewicht auf. Besonders von Vorteil ist, wenn mehrere Querträger und/oder mehrere Längsträger aus faserverstärktem Kunststoff gebildet sind. Es ist möglich, dass alle Querträger und/oder alle Längsträger aus faserverstärktem Kunststoffmaterial gebildet sind. Dadurch wird das Gewicht reduziert und die Stabilität weiter erhöht. Die Belastbarkeit der Bodenstruktur ist in diesem Fall im Vergleich zu Trägern aus einem Holzwerkstoff maßgeblich verbessert. Hinzukommend sind der Quer- und Längsträger feuchteunempfindlich, was einen weiteren Vorteil gegenüber einem Träger aus Holz darstellt.

Des Weiteren hat die Erfindung den Vorteil, dass durch das faserverstärkte Kunststoffmaterial der Quer- und Längsträger mit komplexer Form bzw. komplexem Profil herstellbar ist. Der Quer- und Längsträger ist daher nicht nur gewichtsoptimiert, sondern auch platzoptimiert konfigurierbar. Der Quer- und Längsträger nimmt also im Vergleich zu einem Holzträger, der häufig ein Kantholz oder dergleichen ist, ein geringeres Volumen zwischen der oberen und unteren Deckschicht ein, sodass mehr Volumen beispielsweise für ein thermisch isolierendes Schaummaterial verbleibt. Dies erhöht die Isolierwirkung der Bodenstruktur, was besonders für den Einsatz in einem Kühlfahrzeugaufbau von Vorteil ist.

Bereits bei der Herstellung des Quer- und/oder Längsträges können Durchgangsöffnungen, Ausnehmung oder dergleichen integral ausgebildet werden, ohne eine mechanische Nachbearbeitung durchführen zu müssen. Dies erhöht Stabilität, da keine nachträgliche lokale Schwächung der Träger erfolgt.

Ein weiterer Vorteil der Erfindung besteht darin, dass die Herstellung des Quer- und Längsträgers durch die Bildung aus dem faserverstärkten Kunststoffmaterial vereinfacht und kostengünstig ist. Es sind dabei eine Vielzahl von bekannten Herstellungsverfahren zur Bildung von Kunststoffbauteilen möglich.

Die Bodenstruktur umfasst vorzugsweise wenigstens zwei Längsträger, die an den Längsseiten der Bodenstruktur angeordnet sind, und mehrere Querträger, die zwischen den Längsträgern verlaufen. Bevorzugt sind jeder der Längsträger und jeder der Querträger aus faserverstärktem Kunststoffmaterial gebildet. Die Querträger sind bevorzugt voneinander beanstandet. Es ist auch möglich, dass zumindest zwei der Querträger nebeneinander, d.h. angrenzend, angeordnet sind, um die Stabilität der Bodenstruktur lokal zu erhöhen.

Des Weiteren weist die Bodenstruktur zwei Deckschichten, nämlich eine obere und eine untere Deckschicht auf. Zwischen den Deckschichten ist ein Zwischenraum gebildet, in dem die Querträger angeordnet sind. Die Deckschichten können einlagig oder mehrlagig ausgebildet sein. Es ist von Vorteil, wenn die Deckschichten zumindest eine Lage aufweisen, die aus einem faserverstärkten Kunststoffmaterial gebildet ist. Dies kann beispielsweise eine Lage sein, die die untere bzw. obere Deckschicht nach außen abschließt.

Im Rahmen der Anmeldung beziehen sich die Begriffe "oben", "unten", "obere", "untere" auf die Lage der Bodenstruktur, in der sie zum Einsatz kommt. Dies betrifft vorzugsweise die Einbaulage der Bodenstruktur.

Die Bodenstruktur ist vorzugsweise von einem Fahrzeugchassis separat vorgesehen. Das bedeutet, dass die Bodenstruktur als Einheit zu verstehen ist. Die Quer- und Längsträger sind dabei bevorzugt lediglich Teil der Bodenstruktur. Alternativ kann die Bodenstruktur zumindest teilweise Bestandteil eines Fahrzeugchassis sein.

Bevorzugte Ausführungsformen der Erfindung sind in den Unteransprüchen angegeben.

Besonders bevorzugt sind der Querträger und der Längsträger pultrudiert ausgebildet. Es ist auch möglich, dass entweder der Querträger oder der Längsträger pultrudiert ausgebildet ist. Mit anderen Worten ist der Querträger und/oder Längsträger durch ein Pultrusionsverfahren hergestellt. Besonders bevorzugt ist jeder Querträger und jeder Längsträger pultrudiert ausgebildet. Hier ist vorteilhaft, dass neben einfachen Profilformen des Quer- und/oder Längsträgers auch komplexe Profilformen herstellbar sind. Dies betrifft insbesondere die Herstellung von "Endlos-Bauteilen" wie den Quer- und Längsträgern, die anschließend lediglich abgelängt werden müssen. Alternativ oder zusätzlich kann der Querträger und/oder Längsträger, insbesondere die Querträger und/oder Längsträger, extrudiert, laminiert oder spritzgegossen. Oder anders gesagt, kann der Querträger und/oder der Längsträger durch ein Extrusionsverfahren, ein Laminierverfahren oder ein Spritzgießverfahren hergestellt sein. Der Quer- und Längsträger ist somit einfach und kostengünstig herstellbar. Des Weiteren ist der Quer- und Längsträger einstückig herstellbar bzw. aus einem flüssigen Ausgangsmaterial zu einem Stück formbar.

Bei einer Ausführungsform sind die Verstärkungsfaser Glasfasern und/oder Karbonfasern und/oder Naturfasern. Derartige Fasern haben den Vorteil, dass sie eingebettet in das Kunststoffmaterial die mechanischen Eigenschaften des Quer- bzw. Längsträgers erhöhen, ohne die Bauteildimensionen der Träger vergrößern zu müssen. Hinzukommend, sind Glas-, Karbon- und Naturfasern günstig in der Anschaffung.

Die Verstärkungsfasern können in Form von Fasersträngen, insbesondere Rovings, und/oder gerichteten Fasermatten und/oder ungerichteten Fasermatten in das Kunststoffmaterial eingebracht sein. Als Matrixmaterial zur Bildung des Quer- und Längsträgers können unterschiedliche Harze zur Anwendung kommen. Beispielsweise kann als Matrixmaterial ein Harz auf Basis von Polyurethan (PU), Polyethylen (PE), Polycarbonat (PC) oder ungesättigtem Polyester (UP) zur Bildung der Quer- und Längsträger verwendet werden. Dabei können die Faserstränge, beispielsweise beim Pultrudieren, in das Matrixmaterial eingebracht werden. Diese können in den Quer- und Längsträgern unidirektional angeordnet sein. Alternativ oder zusätzlich können Fasermatten (gerichtet oder ungerichtet) in dem Matrixmaterial eingebettet sein. Derartig h Verstärkungsfasern bilden ein Halbzeug zur Trägerherstellung, das kostengünstig ist sowie schnell und einfach verarbeitet werden kann.

Bevorzugt weisen der Querträger und/oder der Längsträger im Querschnitt ein Doppel-T-Profil, ein U-Profil, ein W-Profil, ein Z-Profil, ein L-Profil, ein H-Profil oder ein I-Profil auf. Vorzugsweise weist der Querträger und/oder der Längsträger über seine gesamte Länge dasselbe Profil auf. Es ist möglich, dass in dem Quer- bzw. Längsträger vereinzelt Ausnehmungen oder Durchbrüche eingearbeitet sein können, sodass das Profil an diesen Stellen zumindest teilweise unterbrochen ist. Die hier aufgelisteten Querschnittsprofile des Quer- und/oder Längsträgers weisen, wie bekannt, eine hohe Formstabilität auf.

Bevorzugt sind der Querträger und/oder der Längsträger als Hohlprofilträger, insbesondere Profilrohr, ausgebildet. Mit anderen Worten ist der Querträger und/oder Längsträger vorzugsweise hohl ausgebildet, d.h. sie weisen einen innenliegenden Hohlraum auf. Der Hohlraum ist vorzugsweise über die gesamte Länge des Träger ausgebildet. Der Querträger und/oder Längsträger kann als Rechteckprofilrohr oder als Quadratprofilrohr ausgebildet sein. Alternativ können der Querträger und/oder Längsträger mit einem Doppel-T-Profil, einem U-Profil, einem W-Profil, einem Z-Profil, einem L-Profil, einem H-Profil oder einem I-Profil innen hohl ausgebildet sein. Hier ist von Vorteil, dass einerseits das Gewicht der Träger reduziert und andererseits Raum geschaffen ist. Beispielsweise kann der Hohlraum in den Trägern, insbesondere zumindest in den Querträgern, mit einem thermisch isolierenden Schaummaterial befüllt sein. D.h., bei einem Einsatz der Bodenstruktur als Kühlkofferboden kann neben dem Zwischenraum zwischen den Querträgern auch der Hohlraum der Querträger mit dem thermisch isolierenden Schaummaterial ausgefüllt sein. Dies wirkt sich vorteilhaft auf die Isolierwirkung des Bodens aus.

Der Querträger und/oder der Längsträger können wenigstens eine Hinterschneidung und/oder wenigstens eine Nut und/oder einen Absatz aufweisen, die/der zumindest abschnittsweise entlang des Trägers verläuft. Beispielsweise kann die Hinterscheidung zur Aufnahme einer Eckblende, insbesondere eines Kantenschutzes, vorgesehen sein. Die Nut kann zum Beispiel in einer Oberseite des Querträgers und/oder in einer Unterseite des Längsträgers ausgebildet sein. Diese kann als Klebenut dienen, um den jeweiligen Träger mit der oberen bzw. unteren Deckschicht zu verkleben. Des Weiteren kann der Absatz eine Auflage für ein Bodenelement, insbesondere eine Bodenplatte, der oberen Deckschicht bilden. Die Hinterschneidung, die Nut sowie der Absatz können vorteilhaft bereits bei der Herstellung der Träger, d.h. ohne mechanische Nachbearbeitung, ausgebildet werden.

Des Weiteren können der Querträger und/oder der Längsträger wenigstens eine Ausnehmung und/oder wenigstens eine Durchgangsöffnung aufweisen, die quer zur Längserstreckung des Trägers ausgebildet sind. Die Ausnehmung hat den Vorteil, dass bspw. der Träger durch Klemmelemente an wenigstens einer der Deckschichten fixiert werden kann. Die Durchgangsöffnung hat den Vorteil, dass bspw. bei einem Ausschäumen des Zwischenraums zwischen den beiden Deckschichten das flüssige Schaummaterial von einer Kammer, die bspw. zwischen zwei benachbarten Querträgern gebildet ist, fließen kann. Dies erleichtert die Einbringung und Verteilung des Schaummaterials in dem Zwischenraum. Besonders bevorzugt weist der Querträger, insbesondere weisen die Querträger, eine mehrere, insbesondere wenigstens zwei, Durchgangsöffnungen auf, um das flüssige Schaummaterial in dem Zwischenraum beim Ausschäumen zu verteilen.

Bei einer bevorzugten Ausführungsform ist der Längsträger an einer Längsseite der Bodenstruktur angeordnet. Dabei schließt der Längsträger den Zwischenraum entlang der Längsseite dicht ab. Besonders bevorzugt sind zwei Längsträger aus faserverstärktem Kunststoffmaterial vorgesehen. Dabei ist jeweils einer der Längsträger an einer der Längsseiten der Bodenstruktur derart angeordnet, dass der Zwischenraum beidseitig, insbesondere entlang der Längsseiten, verschlossen ist. Dies hat den Vorteil, dass der Eintrag von Feuchtigkeit in den Zwischenraum zumindest reduziert ist. Bei einem mit einem Schaummaterial ausgefüllten Zwischenraum wird dadurch eine Beschädigung des Schaums verhindert. Die Isolierwirkung der Schaumlage bleibt damit bestehen.

Bei einer weiteren bevorzugten Ausführungsform ist der Querträger an einer Stirnseite der Bodenstruktur angeordnet. Der Querträger schließt dabei den Zwischenraum entlang der Stirnseite dicht ab. Besonders bevorzugt sind zumindest zwei Querträger aus faserverstärktem Kunststoffmaterial vorgesehen. Dabei ist jeweils einer der Querträger an einer der Stirnseiten der Bodenstruktur derart angeordnet, dass der Zwischenraum front- und heckseitig, insbesondere entlang der Breitseiten der Bodenstruktur, verschlossen ist. Dies erhöht zusätzlich die Dichtigkeit der Bodenstruktur, besonderes hinsichtlich des Zwischenraums.

Nach dem nebengeordneten Anspruch 11 betrifft die Erfindung einen Fahrzeugaufbau, insbesondere Kühlfahrzeugaufbau, mit wenigstens einer erfindungsgemäßen Bodenstruktur. Die Bodenstruktur bildet dabei vorzugsweise einen Ladeboden des Fahrzeugaufbaus. Zusätzlich weist der Fahrzeugaufbau vorzugsweise Isolierpaneele als Seitenwände auf, wobei die Seitenwände entlang der Längsseiten der Bodenstruktur mit den Längsträgern verbunden sind. Front- und heckseitig kann jeweils eine Seitenwand mit einem der Querträger verbunden sein. Andere Ausgestaltungen des Fahrzeugaufbaus sind möglich.

Nach dem nebengeordneten Anspruch 12 betrifft die Erfindung ein Verfahren zur Herstellung einer Bodenstruktur, insbesondere einer erfindungsgemäßen Bodenstruktur, bei dem wenigstens ein Querträger und wenigstens ein Längsträger aus einem faserverstärktem Kunststoffmaterial gebildet werden, wobei der Querträger und/oder der Längsträger in einem Zwischenraum zwischen einer unteren Deckschicht und einer oberen Deckschicht angeordnet und mit den beiden Deckschichten fest verbunden wird/werden.

Vorzugsweise ist die erfindungsgemäße Bodenstruktur nach dem erfindungsgemäßen Verfahren hergestellt.

Bei einer bevorzugten Ausführungsform des erfindungsgemäßen Verfahrens werden der Querträger und/oder der Längsträger durch Pultrudieren hergestellt. Es ist möglich, dass der Querträger und/oder Längsträger als pultrudiertes Hohlprofil hergestellt wird.

Bei einer weiteren bevorzugten Ausführungsform werden der Querträger und/oder der Längsträger durch Extrudieren, Laminieren oder Spritzgießen hergestellt.

Vorzugsweise werden der Querträger auf einer Stirnseite der Bodenstruktur und/oder der Längsträger auf einer Längsseite der Bodenstruktur derart angeordnet, dass die Träger einen außenliegenden Abschluss der Bodenstruktur bilden.

Zu den Vorteilen des Herstellungsverfahrens wird auf die im Zusammenhang mit der Bodenstruktur erläuterten Vorteile verwiesen. Darüber hinaus kann das Verfahren alternativ oder zusätzlich einzelne oder eine Kombination mehrerer zuvor in Bezug auf die Bodenstruktur genannte Merkmale aufweisen.

Bei der erfindungsgemäßen Verwendung kommt die Bodenstruktur der vorstehend genannten Art in einem Kühlfahrzeugaufbau und/oder einem Planenfahrzeugaufbau und/oder einer Wechselbrücke und/oder einer Containereinheit zur Anwendung. Die Bodenstruktur bildet dabei vorzugsweise als Teilkomponente des jeweiligen Aufbaus bzw. der Wechselbrücke und/oder der Containereinheit den Ladeboden.

Die Erfindung wird nachstehend mit weiteren Einzelheiten unter Bezug auf die beigefügten Zeichnungen näher erläutert. Die dargestellten Ausführungsformen stellen schematische Beispiele dar, wie die erfindungsgemäße Bodenstruktur ausgestaltet sein kann.

In diesen zeigen,
- Fig. 1: eine perspektivische Ansicht einer Bodenstruktur nach einem bevorzugten erfindungsgemäßen Ausführungsbeispiel, wobei die obere Deckschicht und einer der Längsträger ausgeblendet sind;
- Fig. 2: einen perspektivischen Detailausschnitt der Bodenstruktur nach Fig. 1 im Bereich der Anbindung der Querträger an einen Längsträger;
- Fig. 3: einen Querschnitt der Bodenstruktur nach Fig. 1 im Bereich eines der Querträger;
- Fig. 4: eine perspektivische Ansicht eines Teilbereichs eines der Querträger der Bodenstruktur nach Fig. 1;
- Fig. 5: einen Querschnitt einer Bodenstruktur nach einem weiteren erfindungsgemäßen Ausführungsbeispiel, im Bereich der Anbindung eines Querträger an einen Längsträger;
- Fig. 6: einen Querschnitt einer Bodenstruktur nach einem weiteren erfindungsgemäßen Ausführungsbeispiel, im Bereich der Anbindung eines Querträger an einen Längsträger;
- Fig. 7: einen Querschnitt einer Bodenstruktur nach einem weiteren erfindungsgemäßen Ausführungsbeispiel, im Bereich der Anbindung eines Querträger an einen Längsträger; und
- Fig. 8: einen Querschnitt einer Bodenstruktur nach einem weiteren erfindungsgemäßen Ausführungsbeispiel, im Bereich der Anbindung eines Querträger an einen Längsträger.

In der nachfolgenden Beschreibung werden für gleiche und gleichwirkende Teile dieselben Bezugsziffern verwendet.

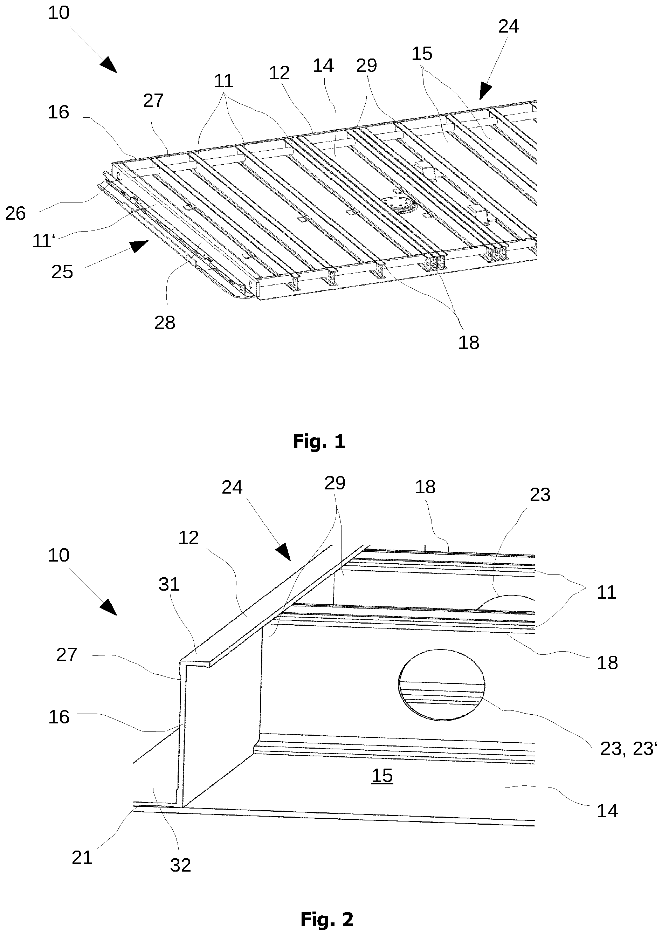

Fig. 1 zeigt eine Bodenstruktur 10 eines Fahrzeugaufbaus 30 nach einem erfindungsgemäßen Ausführungsbeispiel. Als Bodenstruktur 10 werden die strukturellen Bauteile eines Bodens bezeichnet. Konkret zeigt Fig. 1 den vorderen Teil einer Bodenstruktur 10 für einen Sattelauflieger. Eine solche Bodenstruktur 10 kann für einen Kühlfahrzeugaufbau, einem Planenfahrzeugaufbau, eine Wechselbrücke oder auch für eine Containereinheit zur Anwendung kommen.

Die Bodenstruktur 10 umfasst eine Vielzahl von Querträgern 11 und zwei Längsträger 12. Die Längsträger 12 verlaufen in Längsrichtung der Bodenstruktur 10 und die Querträger 11 in Querrichtung der Bodenstruktur 10. In Fig. 1 ist der einfacheren Darstellung halber lediglich einer der beiden Längsträger 12 gezeigt. Die Bodenstruktur 10 weist zwei Längsseiten 24 und zwei Breitseiten auf. Die Längsseiten 24 sind voneinander beabstandet und einander gegenüber angeordnet. Die Breitseiten bilden zwei Stirnseiten 25. Konkret und im eingebauten Zustand bilden die Stirnseiten 25 eine Frontseite und eine Heckseite der Bodenstruktur 10. In Fig. 1 ist die frontseitige Stirnseite 25 gezeigt, an der ein Endquerträger 11' angeordnet ist. Der Endquerträger 11' bildet einen stirnseitigen Abschluss 28 der Bodenstruktur 10. Gleiches gilt vorzugsweise für die heckseitige Stirnseite 25 (nicht dargestellt), wobei der weitere Endquerträger dann einen heckseitigen Abschluss bildet.

Die Längsträger 12 sind an den Längsseiten 24 der Bodenstruktur 10 angeordnet und bilden jeweils einen längsseitlichen Abschluss 27 der Bodenstruktur 10. Gemeinsam bilden die Längsträger 12 und die stirnseitig angeordneten Querträger 11 einen die Bodenstruktur 10 umlaufenden, außenliegenden Abschluss 26.

Die Querträger 11 erstrecken sich zwischen den beiden Längsträgern 12. Wie in Fig. 1 gut erkennbar, sind die Querträger 11 im Wesentlichen in Längsrichtung der Bodenstruktur 10 gleichmäßig verteilt angeordnet. Konkret sind die Querträger 11 in einem Zwischenraum 15 angeordnet, auf den später genauer eingegangen wird.

An Stellen, an denen eine erhöhte Stabilität der Bodenstruktur 10 gefordert ist, sind, wie in Fig. 1 gezeigt, mehrere Querträger 11 als Bündel angeordnet. Konkret sind bei dem Ausführungsbeispiel gemäß Fig. 1 jeweils ein Bündel von drei Querträgern 11 angeordnet, wobei die drei Querträger 11 quer zur Längsrichtung aneinandergereiht positioniert sind.

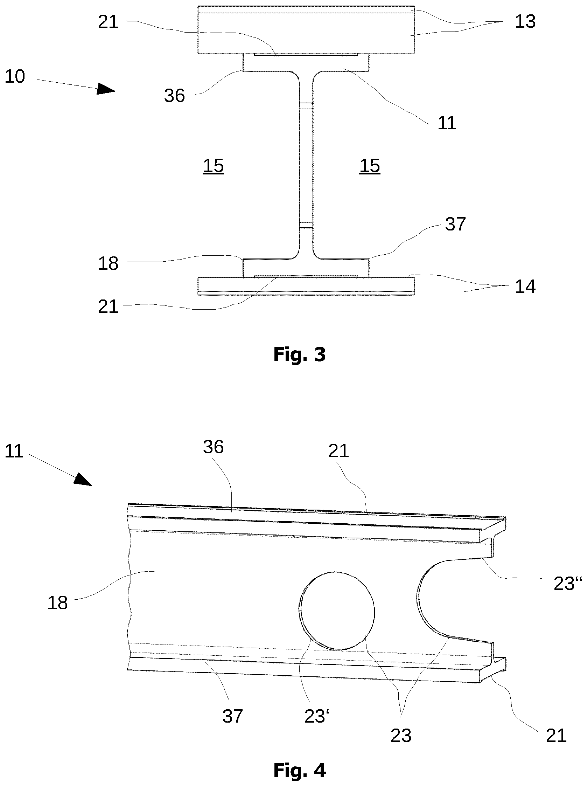

Zusätzlich weist die Bodenstruktur 10 eine obere Deckschicht 13 und eine untere Deckschicht 14 auf, die in den Fig. 1 und 2 sowie im Querschnitt in Fig. 3 und 5 bis 8 ersichtlich ist. Auf die Ausgestaltung der Deckschichten 13, 14 wird später näher eingegangen.

Wie in Fig. 1 gezeigt, ist zwischen den Deckschichten 13, 14 ein Zwischenraum 15 gebildet. Der Zwischenraum 15 ist durch die Deckschichten 13, 14 in Vertikalrichtung, durch die stirnseitigen Querträger 11 und die beiden seitlichen Längsträger 12 begrenzt. In dem Zwischenraum 15 sind die Querträger 11 angeordnet. Es ist dabei möglich, dass die Endquerträger 11' an den beiden Stirnseiten 25 (nur) teilweise in dem Zwischenraum 15 angeordnet sein können.

Bei den erfindungsgemäßen Ausführungsbeispielen sind die Querträger 11 und die Längsträger 12 aus einem Kunststoffmaterial mit eingebetteten Verstärkungsfasern gebildet. Mit anderen Worten sind die Querträger 11 und die Längsträger 12 aus faserverstärktem Kunststoffmaterial gebildet. Oder anders gesagt, sind die Querträger 11 und die Längsträger 12 faserverstärkte Kunststoffträger. Dies kann auch für die Endquerträger 11' gelten.

Die Verstärkungsfasern sind bevorzugt Glasfasern, Karbonfasern oder Naturfasern. Ebenfalls ist es möglich, dass als Verstärkungsfasern eine Kombination der vorgenannten Faserarten, insbesondere ein Fasergemisch, zum Einsatz kommt. Als Matrixmaterial zur Bildung der Querträger 11 und Längsträger 12 sind vorzugsweise unterschiedliche Harze möglich. Bevorzugt ist das Matrixmaterial ein Harz auf Basis von Polyurethan (PU), Polyethylen (PE), Polycarbonat (PC) oder ungesättigtem Polyester (UP), in das die Verstärkungsfasern zur Bildung der Träger 11, 12 eingebracht werden. Bei der Herstellung der Träger 11, 12 werden die Verstärkungsfasern vorzugsweise in Form von Fasersträngen, insbesondere Rovings, und/oder gerichteten Fasermatten und/oder ungerichteten Fasermatten in das Matrixmaterial eingebettet. Nach oder während einem Formgebungsschritt werden die Träger 11, 12 ausgehärtet. Die Träger 11, 12 können bei der Herstellung bereits in der gewünschten Länge ausgebildet oder nach dem Aushärten auf die gewünschte Länge zugeschnitten werden.

Die Querträger 11 und Längsträger 12 lassen sich besonders effizient durch ein Pultrusionsverfahren herstellen. Die Querträger 11 und Längsträger 12 der Bodenstruktur 10 sind damit bevorzugt pultrudiert. Mit anderen Worten sind die Querträger 11 und die Längsträger 12 vorzugsweise pultrudierte, faserverstärkte Kunststoffträger. Als alternative Verfahren zur Herstellung der Querträger 11 und Längsträger 12 können beispielsweise ein Extrusionsverfahren, Laminierverfahren oder Spritzgießverfahren zur Anwendung kommen. Andere Verfahren zur Herstellung der faserverstärkten Kunststoffträger 11, 12 sind möglich.

Gemäß Fig. 1, 2 und 5 bis 8 können die Längsträger 12 unterschiedliche Querschnittsprofile aufweisen. Beispielsweise weisen die Längsträger 12 gemäß Fig. 2 ein Z-Profil 16 auf. Die Längsträger 12 sind nicht die Ausgestaltung mit Z-Profil 16 beschränkt. Generell weisen die Längsträger 12 in allen

Ausführungsbeispielen deren Querschnittsprofil über deren gesamte Länge auf. Die Längsträger 12 sind vorzugsweise einstückig ausgebildet.

Die Querträger 11 liegen mit deren Längsenden 29 an den Längsträgern 12 innenseitig an. Dabei sind die Längsenden 29 der Querträger 11 oben durch einen ersten Schenkel 31 der Längsträger 12 begrenzt. Unten sind die Querträger 11 durch die untere Deckschicht 14 begrenzt. Der Längsträger 12 weist an einem zweiten Schenkel 32 eine in Längsrichtung verlaufende Nut 21 auf. Die Nut 21 dient zur Aufnahme von Klebstoff zur Verbindung des Längsträgers 12 mit der unteren Deckschicht 14.

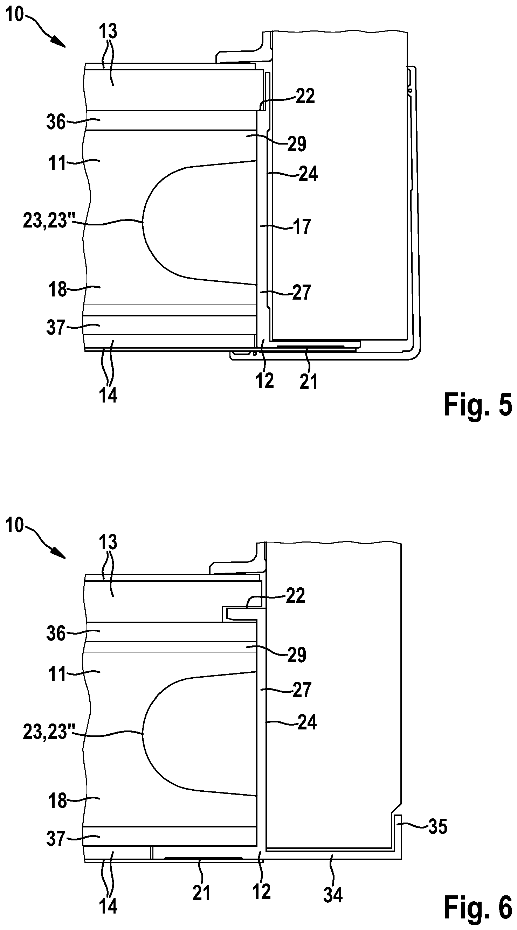

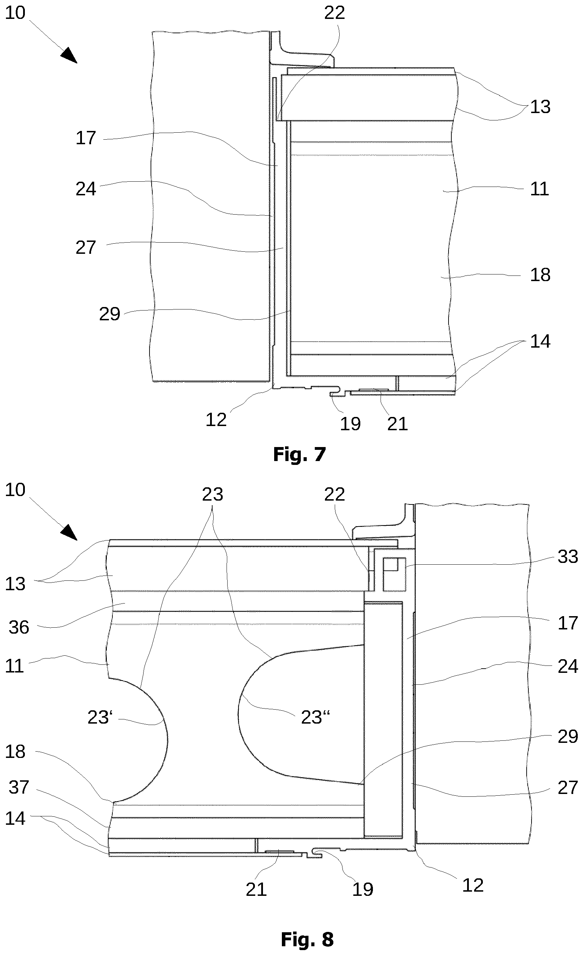

Bei der Bodenstruktur 10 gemäß Fig. 5 weisen die Längsträger 12 eine L-Form auf. Mit anderen Worten weisen die Längsträger 12 gemäß Fig. 5 ein L-Profil 17 auf. Der kurze Schenkel des L-Profils 17 verläuft dabei in eine von dem Zwischenraum 15 abgewandte Richtung, d.h. nach außen. In Fig. 7 ist sind die Längsträger 12 der Bodenstruktur 10, wie in Fig. 5, L-förmig ausgebildet. Allerdings verläuft der kurze Schenkel des L-Profils 17 der Längsträger 12 gemäß Fig. 7 zu dem Zwischenraum 15 hin, d.h. nach innen.

Die Längsträger 12 gemäß Fig. 5 und 7 weisen unten eine Nut 21 zur Verklebung mit der unteren Deckschicht 14 auf. An dem langen, insbesondere vertikalen, Schenkel der Längsträger 12 ist ein Absatz 22 zur Auflage der oberen Deckschicht 13 vorgesehen. Wie in den Figuren zu sehen, ist die obere Deckschicht 13 zweilagig ausgebildet. Eine erste, obenliegende Lage kann aus einem Kunststoffmaterial, insbesondere faserverstärktem Kunststoffmaterial gebildet sein. Alternativ oder zusätzlich kann diese Lage ein Blech umfassen. Eine zweite, darunterliegende, Lage kann aus einer oder mehreren Platten, insbesondere Holzplatten, bestehen. Die untere Deckschicht 14 kann identisch zur oberen Deckschicht 13, insbesondere in umgekehrter Reihenfolge, ausgebildet sein. Andere Materialien sind möglich.

Ferner weisen die Längsträger 12 gemäß Fig. 5 und 7 eine in Längsrichtung verlaufende Hinterschneidung 19 zum Einhängen einer Außenblende, insbesondere eine Eckblende auf. Die Hinterschneidung 19 ist jeweils auf einer Unterseite des kurzen Schenkels ausgebildet. Gleiches gilt für die jeweilige Nut 21.

Fig. 8 zeigt ebenfalls, wie Fig. 7, nach innen gerichtete L-förmige Längsträger 12, wobei im Bereich des Absatzes 22 ein in Längsrichtung verlaufender Kanal 33 als Abstandhalter ausgebildet ist. Dies ermöglicht die Anordnung eines Distanzelements unterhalb des Absatzes 22. Im Übrigen entspricht der Längsträger 12 gemäß Fig. 8 dem Längsträger 12 gemäß Fig. 7.

Fig. 6 zeigt eine Bodenstruktur 10 mit Längsträgern 12, die ein T-förmiges Querschnittsprofil aufweisen. Ein Querschenkel 34 der Längsträger 12 weist dabei ein Nut 21 auf, um die untere Deckschicht 14 mit den Längsträgern 12 zu verkleben. Die Nut 21 bildet ein Reservoir zur Aufnahme von Klebstoff. Ferner weisen die Längsträger 12 einen Absatz 22 auf, der einen seitlichen Steg bildet. Auf einer von der Nut 21 abgewandten Seite des Querschenkels 34 weisen die Längsträger 12 einen Haltesteg 35 zum Halten einer Seitenwand eines Fahrzeugsaufbaus.

Gemäß allen erfindungsgemäßen Ausführungsbeispielen sind die Querträger mit einem I-Profil 18 gemäß Fig. 3 und 4 gezeigt. Diese sind aber nicht auf dieses Querschnittsprofil beschränkt. Die Querträger 11, insbesondere zumindest einer der Querträger 11, können/kann alternativ ein Doppel-T-Profil, ein U-Profil, ein W-Profil, ein Z-Profil, ein H-Profil oder ein L-Profil aufweisen. Alternativ können die Querträger 11, insbesondere kann zumindest einer der Querträger 11, als Hohlprofilträger ausgebildet sein. Konkret können die Querträger 11 ein Rechteckprofilrohr oder Quadratprofilrohr sein. Beispielsweise weist der Endquerträger 11' gemäß Fig. 1 ein Rechteckprofil auf. Dieser kann alternativ auch eines der vorstehend aufgelisteten Profile aufweisen. Andere Querschnittsprofile der Querträger 11 bzw. Endquerträger 11' sind möglich. Es ist möglich, dass auch die vorstehend beschriebenen Längsträger 12 alternativ ein in Bezug auf die Querträger 11 anderes genanntes Querschnittsprofil aufweisen.

Es ist möglich, dass die in dem Zwischenrau 15 angeordneten Querträger 11 zumindest teilweise unterschiedliche Querschnittsprofile aufweisen. Beispielsweise kann zumindest einer der Querträger 11 ein I-Profil 18 aufweisen und zumindest ein weiterer der Querträger 11 ein Profil aus der vorstehend genannten Auflistung.

Wie in Fig. 3 und 4 erkennbar, weisen die Querträger 11 einen Obergurt 36 und einen Untergurt 37 auf. Der Obergurt 36 und der Untergurt 37 sind durch einen Steg miteinander verbunden. Der Querträger 11 ist vorzugsweise einstückig ausgebildet.

Sowohl der Obergurt 36, als auch der Untergurt 37, weisen jeweils eine Nut 21 auf. Die Nut 21 ist jeweils zur Deckschicht 13, 14 hin offen und kann einen Klebstoff aufnehmen, der den Querträger 11 mit der jeweiligen Deckschicht 13, 14 fest verbindet. Wie in Fig. 4 erkennbar ist, erstreckt sich die Nut 21 über die gesamte Länge des Querträgers 11. Ergänzend kann der Querträger 11 mit der unteren und/oder oberen Deckschicht 13, 14 verschraubt sein. Insbesondere kann im Steg wenigstens eine Gewindebohrung vorgesehen sein, die sich durch den Untergurt 37 und/oder den Obergurt 36 in den Steg erstreckt und eine Schraube aufnimmt, welche durch die untere Deckschicht 14 oder die obere Deckschicht 13 mit dem Querträger 11 verbunden ist.

Ferner sind in Fig. 4 Durchgangsöffnungen 23 erkennbar, die sich durch den Steg erstrecken. Eine erste 23' der Durchgangsöffnungen 23 ist näher am Untergurt 37 als am Obergurt 36 angeordnet. Konkret grenzt die erste Durchgangsöffnung 23' an den Untergurt 37 an.

Die Querträger 11 weisen ferner an zumindest einem der Längsenden 29, bevorzugt an beiden Längsenden 29, eine zweite Durchgangsöffnung 23" auf. Durch die zweite Durchgangsöffnung 23" sind die Querträger 11 in Trägerlängsrichtung nach außen offen. Der Zweck der zweiten Durchgangsöffnung 23" besteht darin, einen Durchgang für Schaummaterial zu schaffen. So kann Schaummaterial in die Teilzwischenräume 15 zwischen den Querträgern 11 eingefüllt werden und über die zweiten Durchgangsöffnungen 23" jeweils in den benachbarten Teilzwischenraum 15 fließen. Auf diese Weise wird eine schnelle und gleichmäßige Füllung der Bodenstruktur mit Schaummaterial bewirkt. Die erste Durchgangsöffnung 23' dient vorzugsweise zur Aufnahme eines Kabelkanals. Alternativ kann die erste Durchgangsöffnung 23', wie die zweite Durchgangsöffnung 23", zur Verteilung von eingefülltem Schaummaterial auf die Teilzwischenräume 15 dienen.

Die Merkmale der beschriebenen Ausführungsbeispiele sind nicht auf die einzelnen Ausführungsbeispiele beschränkt, sondern sind frei untereinander kombinierbar.

### Bezugszeichenliste

- 10: Bodenstruktur
- 11: Querträger
- 12: Längsträger
- 13: obere Deckschicht
- 14: untere Deckschicht
- 15: Zwischenraum
- 16: Z-Profil
- 17: L-Profil
- 18: I-Profil
- 19: Hinterschneidung
- 21: Nut
- 22: Absatz
- 23: Durchgangsöffnung
- 23': erste Durchgangsöffnung
- 23": zweite Durchgangsöffnung
- 24: Längsseite der Bodenstruktur
- 25: Stirnseite der Bodenstruktur
- 26: außenliegender Abschluss
- 27: längsseitiger Abschluss
- 28: stirnseitiger Abschluss
- 29: Längsende der Querträger
- 31: erster Schenkel der Längsträger
- 32: zweiter Schenkel der Längsträger
- 33: Kanal
- 34: Querschenkel
- 35: Haltesteg
- 36: Obergurt
- 37: Untergurt

## Patentansprüche

1. Bodenstruktur (10) eines Fahrzeugaufbaus, insbesondere eines Kühlfahrzeugs, mit mehreren Querträgern (11) und mehreren Längsträgern (12), wobei sich die Querträger (11) zwischen den Längsträgern (12) erstrecken, und wenigstens einer oberen Deckschicht (13) und einer unteren Deckschicht (14), die mit den Querträgern (11) und/oder Längsträgern (12) fest verbunden sind, wobei zumindest die Querträger (11) in einem Zwischenraum (15) zwischen den beiden Deckschichten (13, 14) angeordnet sind,
**dadurch gekennzeichnet, dass**
wenigstens einer der Querträger (11) und wenigstens einer der Längsträger (12) aus einem Kunststoffmaterial mit eingebetteten Verstärkungsfasern gebildet sind.

2. Bodenstruktur (10) nach Anspruch 1
**dadurch gekennzeichnet, dass**
der Querträger (11) und/oder der Längsträger (12) pultrudiert, extrudiert, laminiert oder spritzgegossen ist.

3. Bodenstruktur (10) nach Anspruch 1 oder 2
**dadurch gekennzeichnet, dass**
die Verstärkungsfaser Glasfasern und/oder Karbonfasern und/oder Naturfasern sind.

4. Bodenstruktur (10) nach einem der vorhergehenden Ansprüche
**dadurch gekennzeichnet, dass**
die Verstärkungsfasern in Form von Fasersträngen, insbesondere Rovings,
und/oder gerichteten Fasermatten und/oder ungerichteten Fasermatten in das Kunststoffmaterial eingebracht sind.

5. Bodenstruktur (10) nach einem der vorhergehenden Ansprüche
**dadurch gekennzeichnet, dass**
der Querträger (11) und/oder der Längsträger (12) im Querschnitt ein Doppel-T-Profil, ein U-Profil, ein W-Profil, ein Z-Profil (16), ein L-Profil (17), ein H-Profil oder ein I-Profil (18) aufweist.

6. Bodenstruktur (10) nach einem der vorhergehenden Ansprüche, insbesondere nach Anspruch 5
**dadurch gekennzeichnet, dass**
der Querträger (11) und/oder der Längsträger (12) als Hohlprofilträger, insbesondere Profilrohr, ausgebildet ist.

7. Bodenstruktur (10) nach einem der vorhergehenden Ansprüche
**dadurch gekennzeichnet, dass**
der Querträger (11) und/oder der Längsträger (12) wenigstens eine Hinterschneidung (19) und/oder wenigstens eine Nut (21) und/oder einen Absatz (22) aufweist, die/der zumindest abschnittsweise entlang des Trägers (11, 12) verläuft.

8. Bodenstruktur (10) nach einem der vorhergehenden Ansprüche
**dadurch gekennzeichnet, dass**
der Querträger (11) und/oder der Längsträger (12) wenigstens eine Ausnehmung und/oder wenigstens eine Durchgangsöffnung (23) aufweist, die quer zur Längserstreckung des Trägers (11, 12) ausgebildet ist.

9. Bodenstruktur (10) nach einem der vorhergehenden Ansprüche
**dadurch gekennzeichnet, dass**
der Längsträger (12) an einer Längsseite (24) der Bodenstruktur (10) angeordnet ist und den Zwischenraum (15) entlang der Längsseite (24) dicht abschließt.

10. Bodenstruktur (10) nach einem der vorhergehenden Ansprüche
**dadurch gekennzeichnet, dass**
der Querträger (11) an einer Stirnseite (25) der Bodenstruktur (10) angeordnet ist und den Zwischenraum (15) entlang der Stirnseite (25) dicht abschließt.

11. Fahrzeugaufbau, insbesondere Kühlfahrzeugaufbau, mit wenigstens einer Bodenstruktur (10) nach einem der vorhergehenden Ansprüche.

12. Verfahren zur Herstellung einer Bodenstruktur (10), insbesondere nach einem der Ansprüche 1 bis 10, bei dem wenigstens ein Querträger (11) und wenigstens ein Längsträger (12) aus einem faserverstärktem Kunststoffmaterial gebildet werden, wobei der Querträger (11) und/oder der Längsträger (12) in einem Zwischenraum (15) zwischen einer unteren Deckschicht (14) und einer oberen Deckschicht (13) angeordnet und mit den beiden Deckschichten (13, 14) fest verbunden wird/werden.

13. Verfahren nach Anspruch 12
**dadurch gekennzeichnet, dass**
der Querträger (11) und/oder der Längsträger (12) durch Pultrudieren hergestellt wird.

14. Verfahren nach Anspruch 12
**dadurch gekennzeichnet, dass**
der Querträger (11) und/oder der Längsträger (12) durch Extrudieren, Laminieren oder Spritzgießen hergestellt wird.

15. Verfahren nach einem der Ansprüche 12 bis 14
**dadurch gekennzeichnet, dass**
der Querträger (11) auf einer Stirnseite der Bodenstruktur (10) und/oder der Längsträger (12) auf einer Längsseite der Bodenstruktur (10) derart angeordnet werden, dass die Träger (11, 12) einen außenliegenden Abschluss (26) der Bodenstruktur (10) bilden.

16. Verwendung einer Bodenstruktur (10) nach einem der Ansprüche 1 bis 10 in einem Kühlfahrzeugaufbau und/oder einem Planenfahrzeugaufbau und/oder einer Wechselbrücke und/oder einer Containereinheit.
